# EUROPEAN PATENT APPLICATION

(11) **EP 4 119 219 A1**
(43) Date of publication of application: **18.01.2023**
(21) Application number: 21767659.2
(22) Date of filing: 12.03.2021
(51) Int. Cl.: B01J 13/00, A24F 47/00

(54) **DUAL AIR PASSAGE INTAKE STRUCTURE, POWER SUPPLY DEVICE, AND AEROSOL GENERATING DEVICE**

(30) Priority: 13.03.2020 CN 202020319370 U
(71) Applicant: Changzhou Patent Electronic Technology Co., Ltd, Changzhou, Jiangsu 213125 (CN)
(72) Inventor: QIU, Weihua, hangzhou, Jiangsu 213125 (CN)
(74) Representative: Zaboliene, Reda
(86) International application number: PCT/CN2021/080379
(87) International publication number: WO 2021/180194

(57) **Abstract**

A dual-airway intake structure (10) used for an aerosol generating device is provided. The dual-airway intake structure (10) includes a base (11) and a sensor (12). The base (11) is provided with a sensing cavity (101); the sensing cavity (101) is communicated with an air outlet passage of the aerosol generating device; a mounting portion (102) is provided in the sensing cavity (101); the mounting portion (102) is provided with a mounting cavity (103); the sensor (12) is mounted on the mounting portion (102) and seals the mounting cavity (103); the base (11) is provided with air inlets (104) and a communicating hole (105); the air inlets (104) are communicated with the sensing cavity (101) and the outside atmosphere; the communicating hole (105) is communicated with the mounting cavity (103) and the outside atmosphere; the mounting portion (102) is provided with a communicating groove (106); the communicating groove (106) is communicated with the mounting cavity (103) and the sensing cavity (101); and a cross sectional area of the communicating groove (106) and/or a cross sectional area of the communicating hole (105) is smaller than a cross sectional area of each air inlet (104). According to the dual-airway intake structure (10), the air pressure on both sides of the sensor (12) can also be maintained consistent in the case of a mistaken trigger, thereby ensuring that the sensor (12) would not be triggered unintentionally. Also provided are a power supply device having the dual-airway intake structure (10) and an aerosol generating device having the power supply device.

## Description

### TECHNICAL FIELD

The present disclosure relates to an aerosol generating device, in particular to a dual-airway intake structure, a power supply device, and an aerosol generating device.

### BACKGROUND

Aerosol generating device is also known as electronic atomizer. Its working principle is that after the power switch is turned on, the power supply device supplies power to the atomizer, and after the atomizer is powered, it heats the aerosol-forming substrate to generate smoke for the user to inhale.

At present, most of the aerosol generating devices on the market are equipped with sensors. When the user sucks, the sensor senses the gas pressure difference on both sides thereof. Further, the power supply device is controlled to supply power to the atomizer. When the sucking action is stopped, the power supply device stops supplying power to the atomizer. In this way, the automatic use is realized, which is convenient for the user to operate.

However, the air intake of traditional aerosol generating devices usually adopts single air intake. When the user touches, packs or transports the aerosol generating device, the space for installing the sensor is likely to be squeezed, resulting in a gas pressure difference between the two sides of the sensor. As a result, the aerosol generating device is triggered unintentionally and causes the waste of electric energy and the aerosol-forming substrate, and it also brings certain safety hazards to the user's packaging, transportation and use.

### SUMMARY

Based on this, it is necessary to provide a dual-airway intake structure that can prevent the sensor from being triggered unintentionally.

It is also necessary to provide a power supply device with the dual-airway intake structure.

It is more necessary to provide an aerosol generating device with the power supply device.

The technical solution adopted by the present disclosure to solve its technical problems is: a dual-airway intake structure configured for an aerosol generating device includes a base and a sensor, wherein a sensing cavity is provided in the base, the sensing cavity is in communication with an air outlet passage of the aerosol generating device, a mounting portion is provided in the sensing cavity, a mounting cavity is provided in the mounting portion, the sensor is mounted on the mounting portion and seals the mounting cavity, the base is provided with an air inlet and a communication hole, the air inlet is in communication with the sensing cavity and the outside atmosphere, the communication hole is in communication with the mounting cavity and the outside atmosphere, the mounting portion is provided with a communication groove, the communication groove is in communication with the mounting cavity and the sensing cavity, a cross-sectional area of the communication groove and/or the communication hole is smaller than a cross-sectional area of the air inlet.

Further, an upper end of the base is provided with an opening, the sensing cavity is formed by the opening of the base, the mounting portion is protruded from an inner bottom wall of the base, an upper end of the mounting portion is provided with an opening, the mounting cavity is formed by the opening of the mounting portion.

Further, an abutting edge is protruded from an inner wall of a lower end of the mounting portion, the sensor abuts against the abutting edge, a first communication groove is defined at the abutting edge, the first communication groove is in communication with the communication hole; a second communication groove is defined at an inner wall of the mounting portion; one end of the second communication groove penetrates through an upper end surface of the mounting portion, the other end of the second communication groove is in communication with the first communication groove, the communication groove includes the first communication groove and the second communication groove.

Further, the air inlet and the communication hole are both defined at a lower end surface of the base, the communication hole is arranged along a central axis of the mounting portion, the air inlet is arranged at one side of the communication hole and is located outside the mounting portion.

Further, the upper end surface of the mounting portion is recessed downward along an axial direction of the mounting portion to form a notch, the notch penetrates through inner and outer walls of the mounting portion, a lead wire of the sensor extends into the sensing cavity after passing through the notch, the notch is filled with a sealant.

A power supply device includes the dual-airway intake structure described in any one of the foregoing, the power supply device further includes a battery casing and a battery, the battery is installed in the battery casing, the base is installed at a lower end of the battery casing, a first air outlet passage is formed between an inner wall of the battery casing and an outer wall of the battery, the first air outlet passage is in communication with the sensing cavity, the air outlet passage includes the first air outlet passage.

Further, a top of the mounting portion is protruded with a protrusion, the communication groove penetrating through the upper end surface of the mounting portion is staggered from the protrusion, a lower end surface of the battery abuts against the protrusion.

An aerosol generating device includes the power supply device described in any one of the foregoing, the aerosol generating device further includes an atomizer, the atomizer is electrically connected to the power supply device, a second air outlet passage is provided in the atomizer, the second air outlet passage is in communication with the first air outlet passage, the air outlet passage further includes the second air outlet passage.

Further, the atomizer includes a liquid storage member, an atomizing base, a mouthpiece and a vent tube, the liquid storage member is connected to the battery casing, a liquid storage cavity is provided in the liquid storage member, the liquid storage cavity is configured to store an aerosol-forming substrate, the atomizing base and the mouthpiece are respectively installed at opposite ends of the liquid storage member, the vent tube is accommodated in the liquid storage cavity, the second air outlet passage is formed by an inner cavity of the vent tube, the mouthpiece is provided with a smoke outlet, the second air outlet passage is in communication with the smoke outlet.

Further, the atomizer further includes an atomizing assembly, a lower part of the space of the second air outlet passage forms an atomizing cavity, the atomizing assembly is accommodated in the atomizing cavity, a liquid inlet is provided in a side wall of the vent tube, the liquid inlet is in communication with the liquid storage cavity and the atomizing cavity.

The beneficial effects of the present disclosure are: in the dual-airway air intake structure or the power supply device or the aerosol generating device provided by the present disclosure, by providing the communication hole and the communication groove, when the user touches the communication hole unintentionally, a small amount of gas entering the mounting cavity through the communication hole can enter the sensing cavity through the communication groove, so that the gas pressures on both sides of the sensor are kept the same, to ensure that the sensor will not be triggered unintentionally.

### BRIEF DESCRIPTION OF THE DRAWINGS

The following further describes the present disclosure with reference to the accompanying drawings and embodiments.
FIG. 1 is a perspective view of the aerosol generating device of the present disclosure;
FIG. 2 is an exploded view of the aerosol generating device shown in FIG. 1;
FIG. 3 is an exploded view of the power supply device of the aerosol generating device shown in FIG. 2;
FIG. 4 is an exploded view of the dual-airway intake structure of the power supply device shown in FIG. 3 from another perspective;
FIG. 5 is a cross-sectional view of the dual-airway intake structure shown in FIG. 4;
FIG. 6 is an exploded view of the atomizer of the aerosol generating device shown in FIG. 2;
FIG. 7 is a cross-sectional view of the aerosol generating device shown in FIG. 1.

The part names and reference signs shown in the figures are as follows:

| | | |
|---|---|---|
| atomizer 100 | power supply device 200 | dual-airway intake structure 10 |
| base 11 | sensing cavity 101 | mounting portion 102 |
| mounting cavity 103 | air inlet 104 | communication hole 105 |
| communication groove 106 | abutting edge 107 | first communication groove 108 |
| second communication groove 109 | notch 1021 | support bar 1022 |
| protrusion 1023 | sensor 12 | lead wire 121 |
| battery casing 20 | first air outlet passage 201 | battery 30 |
| liquid storage member 40 | liquid storage cavity 401 | liquid injection hole 402 |
| sealing member 403 | atomizing base 50 | mouthpiece 60 |
| smoke outlet 601 | vent tube 70 | second air outlet passage 701 |
| atomizing cavity 702 | liquid inlet 703 | atomizing assembly 80 |
| liquid guiding member 81 | heating member 82 | |

### DETAILED DESCRIPTION OF PREFERRED EMBODIMENTS

The present disclosure will now be described in detail with reference to the accompanying drawings. These figures are simplified schematic diagrams, which only illustrate the basic structure of the present disclosure in a schematic manner, so they only show the structures related to the present disclosure.

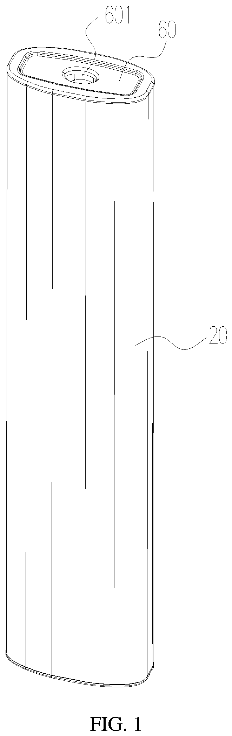

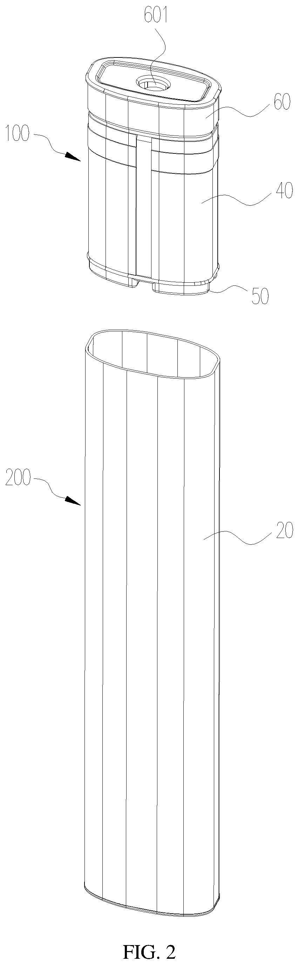

Please refer to FIG. 1 and FIG. 2, the present disclosure provides an aerosol generating device. The aerosol generating device includes an atomizer 100 and a power supply device 200 electrically connected to the atomizer 100. In use, the power supply device 200 provides electrical energy to the atomizer 200, and after the atomizer 100 is powered on, the aerosol-forming substrate is heated and atomized under the action of heating to form smoke for the user to inhale.

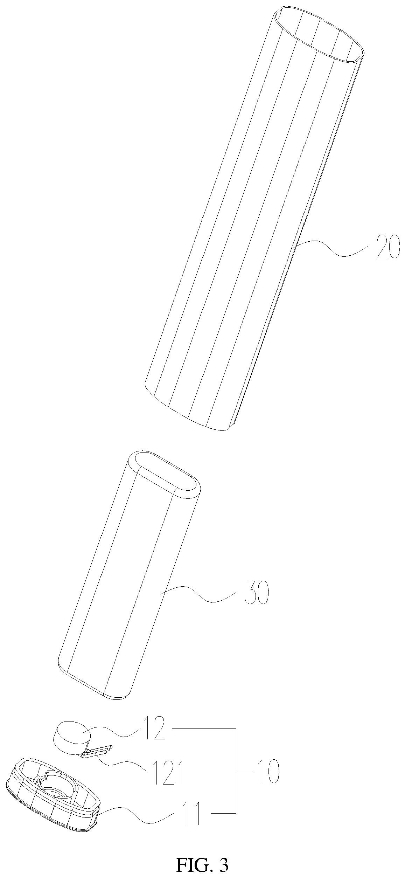

Please refer to FIG. 3, the power supply device 200 includes a dual-airway intake structure 10, and the dual-airway intake structure 10 is configured for air intake. Specifically, when the user inhales, the external air enters the inside of the aerosol generating device through the dual-airway intake structure 10, and then mixes with the formed smoke, and finally enters the user's mouth.

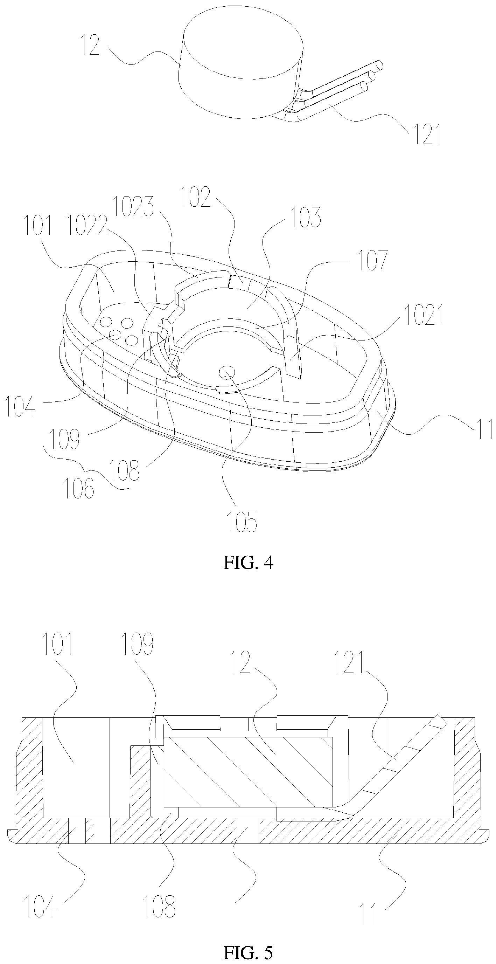

Please refer to FIG. 4, FIG. 5 and FIG. 7, the dual-airway intake structure 10 includes a base 11 and a sensor 12. A sensing cavity 101 is provided in the base 11. The sensing cavity 101 is in communication with an air outlet passage of the aerosol generating device. A mounting portion 102 is provided in the sensing cavity 101. A mounting cavity 103 is provided in the mounting portion 102. The sensor 12 is mounted on the mounting portion 102 and seals the mounting cavity 103. The base 11 is provided with an air inlet 104 and a communication hole 105. The air inlet 104 is in communication with the sensing cavity 101 and the outside atmosphere. The communication hole 105 is in communication with the mounting cavity 103 and the outside atmosphere. The mounting portion 102 is provided with a communication groove 106. The communication groove 106 is in communication with the mounting cavity 103 and the sensing cavity 101. The cross-sectional area of the communication groove 106 and/or the communication hole 105 is smaller than the cross-sectional area of the air inlet 104.

In the traditional aerosol generating device, the sensor is installed in the mounting cavity to form a closed space, and when touching the communication hole, the closed space is squeezed, resulting in a difference of air pressure on both sides of the sensor, thus triggering the sensor unintentionally. In the aerosol generating device of the present disclosure, a communication hole 105 in communication with the mounting cavity 103 is additionally provided on the base 11, and a communication groove 106 in communication with the mounting cavity 103 and the sensing cavity 101 is additionally provided on the mounting portion 102. When the user touches the communication hole 105 unintentionally, a small amount of gas entering the mounting cavity 103 through the communication hole 105 can enter the sensing cavity 101 through the communication groove 106. Therefore, the gas pressures on both sides of the sensor 12 are kept the same, to ensure that the sensor 12 will not be triggered unintentionally, thereby improving the safety and reducing the unexpected consumption of electric energy and the aerosol-forming substrate. Meanwhile, since the cross-sectional area of the communication groove 106 and/or the communication hole 105 is smaller than the cross-sectional area of the air inlet 104, when the user inhales normally, the amount of air entering through the communication hole 105 is less than the amount of air entering through the air inlet 104, the formation of gas pressure difference on both sides of the sensor 12 will not be affected due to the excessive intake air, to ensure that the sensor 12 has high sensitivity and enable it to work normally.

It should be noted that the cross-sectional area of the air inlet 104 is the area taken vertically to the direction in which the gas flows through the air inlet 104. The cross-sectional area of the communication groove 106 is the area taken vertically to the direction in which the gas flows through the communication groove 106. The cross-sectional area of the communication hole 105 is the area taken vertically to the direction in which the gas flows through the communication hole 105.

Referring to FIG. 4, in a specific embodiment, the upper end of the base 11 is provided with an opening, the sensing cavity 101 is formed by the opening of the base 11. The mounting portion 102 is protruded from the center of the inner bottom wall of the base 11. Specifically, the mounting portion 102 is arranged along the axial direction of the base 11, and the upper end of the mounting portion 102 is provided with an opening, the mounting cavity 103 is formed by the opening of the mounting portion 102. In this embodiment, the cross section of the mounting portion 102 is circular, and correspondingly, the sensor 12 is cylindrical, the outer wall of the sensor 12 and the inner wall of the mounting portion 102 are in an interference fit and sealed connection. It can be understood that, in other embodiments, the cross section of the mounting portion 102 may also be in an ellipse, a polygon, or the like, which is not limited here.

In a specific embodiment, an annular abutting edge 107 is protruded inwardly from the inner wall of the lower end of the mounting portion 102 along the radial direction of the mounting portion 102. A first communication groove 108 is defined at the upper end surface of the abutting edge 107. The first communication groove 108 penetrates through the inner wall of the abutting edge 107. The other end of the first communication groove 108 extends to the inner wall of the mounting portion 102. A second communication groove 109 is defined at the inner wall of the mounting portion 102 along the axial direction of the mounting portion 102. The upper end of the second communication groove 109 penetrates through the upper end surface of the mounting portion 102. The lower end of the second communication groove 109 is in communication with the first communication groove 108. The communication groove 106 includes the first communication groove 108 and the second communication groove 109.

During installation, the lower end surface of the sensor 12 abuts against the upper end surface of the abutting edge 107, so that a gap is formed between the lower end surface of the sensor 12 and the inner bottom wall of the base 11. The gap is in communication with one end of the first communication groove 108 and the communication hole 105, so that the gap is in communication with the second communication groove 109 through the first communication groove 108, to further realize the communication relationship between the mounting cavity 103 and the sensing cavity 101.

In a specific embodiment, the air inlet 104 and the communication hole 105 are both defined at the lower end surface of the base 11. Specifically, the communication hole 105 is arranged along the central axis of the mounting portion 102, the air inlet 104 is arranged at one side of the communication hole 105 and is located outside the mounting portion 102. In this embodiment, the air inlet 104 is formed by a plurality of through holes arranged close to each other, but there is only one communication hole 105.

In order to prevent the lead wire 121 of the sensor 12 from interfering with the installation of the sensor 12, in a specific embodiment, the upper end surface of the mounting portion 102 is recessed downward along the axial direction of the mounting portion 102 to form a notch 1021. The notch 1021 penetrates through the inner and outer walls of the mounting portion 102, so that the notch 1021 is in communication with the mounting cavity 103. When the sensor 12 is installed in the mounting cavity 103, the lead wire 121 of the sensor 12 extends into the sensing cavity 101 after passing through the notch 1021. Further, in order to avoid gas leakage, the notch 1021 is filled with a sealant (not shown). The sealant seals and fills the notch 1021, and fixes the lead wire 121 on the mounting portion 102. Thus, the sealant also plays the role of sealing the notch 1021 while fixing the lead wire 121.

In addition, a support bar 1022 is protruded on the outer wall of the mounting portion 102 along the axial direction of the mounting portion 102. The support bar 1022 is located corresponding to the second communication groove 109. By providing the support bar 1022, the mechanical strength of the mounting portion 102 reduced due to the forming of the second communication groove 109 can be compensated, and the mounting portion 102 can be supported by the support bar 1022 to prevent the mounting portion 102 from being deformed.

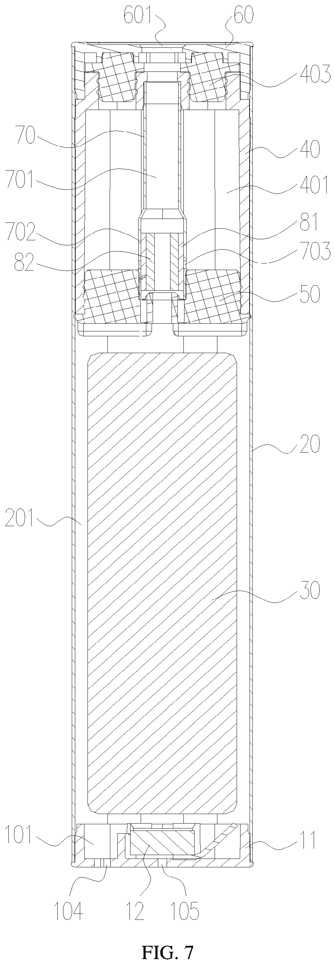

Please refer to FIG. 3 and FIG. 7, the power supply device 200 further includes a battery casing 20 and a battery 30. The battery 30 is installed in the battery casing 20. The base 11 is installed at the lower end of the battery casing 20. The battery casing 20 is roughly in the form of a hollow cylindrical structure with two ends being penetrated through. A first air outlet passage 201 is formed between the inner wall of the battery casing 20 and the outer wall of the battery 30. The first air outlet passage 201 penetrates through opposite ends of the battery casing 20. When the base 11 is installed at the lower end of the battery casing 20, the first air outlet passage 201 is in communication with the sensing cavity 101. The air outlet passage includes the first air outlet passage 201.

In addition, please refer to FIG. 4 and FIG. 7, the top of the mounting portion 102 is protruded with a protrusion 1023. The communication groove 106 penetrating through the upper end surface of the mounting portion 102 is staggered from the protrusion 1023. When installed in place, the lower end surface of the battery 30 abuts against the protrusion 1023, so as to prevent the battery 30 from closing the communication groove 106.

The power supply device 200 further includes a controller (not shown), and the controller is electrically connected to the battery 30, the sensor 12 and the atomizer 100. When the user sucks, the external air enters the sensing cavity 101 through the air inlet 104 and the communication hole 105, the sensor 12 detects the gas pressure difference on both sides thereof and generates a signal, this signal is transmitted to the controller; after the controller obtains the signal, it controls the battery 30 to supply power to the atomizer 100, and the atomizer 100 heats and atomizes the aerosol-forming substrate to form smoke. When the user stops sucking, the sensor 12 no longer generates signal, and the signal received by the controller is interrupted, at this time, the battery 30 stops supplying power to the atomizer 100. In this embodiment, the sensor 12 is an air pressure sensor.

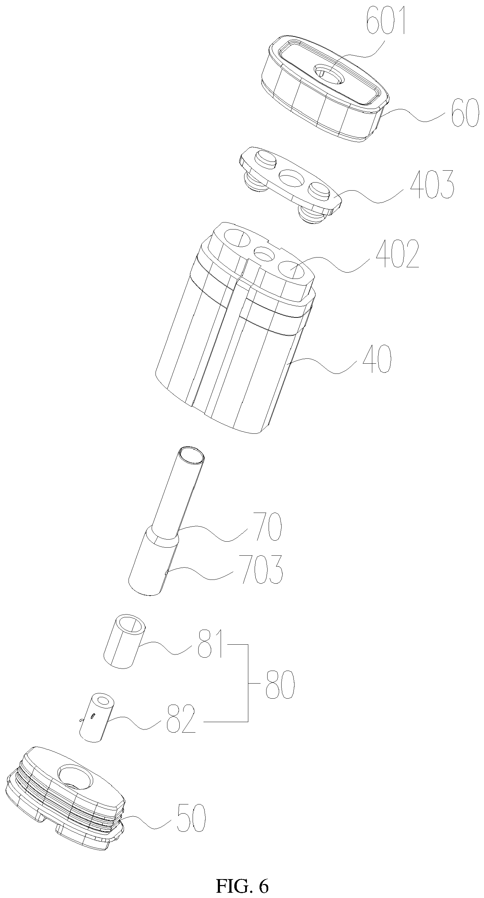

Please refer to FIG. 6 and FIG. 7, the atomizer 100 is installed on one end of the power supply device 200 opposite to the dual-airway intake structure 10. When the atomizer 100 and the power supply device 200 are installed in place, the atomizer 100 is electrically connected to the positive and negative electrodes of the battery 30, so that the power supply device 200 can supply power to the atomizer 100.

In a specific embodiment, the atomizer 100 includes a liquid storage member 40, an atomizing base 50, a mouthpiece 60, a vent tube 70 and an atomizing assembly 80. The atomizing base 50 and the mouthpiece 60 are respectively installed at opposite ends of the liquid storage member 40. A liquid storage cavity 401 is provided in the liquid storage member 40. The liquid storage cavity 401 is configured to store the aerosol-forming substrate. The vent tube 70 is accommodated in the liquid storage cavity 401. A second air outlet passage 701 is provided in the vent pipe 70. Part of the space of the second air outlet passage 701 forms an atomizing cavity 702. The atomizing assembly 80 is accommodated in the atomizing cavity 702. The atomizing cavity 702 is in communication with the liquid storage cavity 410. The liquid storage member 40 is accommodated in the upper end of the battery casing 20, so as to realize the connection relationship between the atomizer 100 and the power supply device 200. When the atomizer 100 and the power supply device 200 are installed in place, the second air outlet passage 701 is in communication with the first air outlet passage 201. The air outlet passage includes the second air outlet passage 701.

In a specific embodiment, the liquid storage member 40 is generally in the form of a hollow cylindrical structure with an opening at the lower end. The liquid storage cavity 401 is formed by the inner cavity of the liquid storage member 40. The atomizing base 50 is installed at the lower end of the liquid storage member 40 and seals the liquid storage cavity 401. The mouthpiece 60 is installed at the upper end of the liquid storage member 40. The mouthpiece 60 is provided with a smoke outlet 601. The vent pipe 70 has two ends being opened. The second air outlet passage 701 is formed by the inner cavity of the vent tube 70. The upper end of the vent pipe 70 is connected with the upper end of the liquid storage member 40, the second air outlet passage 701 is in communication with the smoke outlet 601. The lower end of the vent pipe 70 is inserted into a through hole of the atomizing base 50. The atomizing base 50 is made of a sealing material such as silicone or rubber, so as to improve the sealing performance and prevent the leakage of the aerosol-forming substrate.

The atomizing cavity 702 is formed by the lower part of the space of the second air outlet passage 701. A liquid inlet 703 is provided in the side wall of the vent pipe 70. The liquid inlet 703 is in communication with the liquid storage cavity 401 and the atomizing cavity 72. In a specific embodiment, the atomizing assembly 80 includes a liquid guiding member 81 and a heating member 82 that are in contact with each other. The liquid guiding member 81 has the ability to absorb the aerosol-forming substrate. The heating member 82 is electrically connected to the battery 30 and can generate heat after being energized. The liquid guiding member 81 is attached to the inner wall of the vent tube 70 corresponding to the liquid inlet 703, so as to absorb the aerosol-forming substrate entering the atomizing cavity 702 through the liquid inlet 703. The heating member 82 is accommodated in the liquid guiding member 81, and is configured for heating the aerosol-forming substrate absorbed on the liquid guiding member 81. In this embodiment, the liquid guiding member 81 is cotton, and the heating member 82 is a mesh-type heating cylinder. It can be understood that, in other embodiments not shown, the liquid guiding member 81 can also be sponge, fiber rope, porous ceramic or porous graphite, etc., the heating member 82 may also be a heating sheet, a heating wire, or a heating rod. In other embodiments not shown, the atomizing assembly 80 can also be an ultrasonic atomizing sheet or a heating ceramic, etc., which is not limited here.

During use, the aerosol-forming substrate in the liquid storage cavity 401 enters into the atomizing cavity 702 through the liquid inlet 703, and is absorbed by the liquid guiding member 81. The heating member 82 heats the aerosol-forming substrate absorbed on the liquid guiding member 81. The aerosol-forming substrate is atomized under the action of heating to form smoke, the smoke fills up the atomizing cavity 702. When the user sucks, the external air entering the sensing cavity 101 through the air inlet 104 and the communication hole 105 enters the atomizing cavity 702 after passing through the first air outlet passage 201, and then mixes with the generated smoke, and the mixed gas enters the user's mouth through the second air outlet passage 701 and the smoke outlet 601 in sequence.

In a specific embodiment, the top of the liquid storage member 40 is provided with a liquid injection hole 402. The liquid injection hole 402 is in communication with the liquid storage cavity 401. The liquid injection hole 402 is configured for the user to perform liquid injection operation. A sealing member 403 is installed in the liquid injection hole 402, and the sealing member 403 is configured to seal the liquid injection hole 402 to prevent the aerosol-forming substrate from leaking through the liquid injection hole 402. It can be understood that the sealing member 403 is made of a sealing material such as silicone or rubber, so as to improve the sealing performance. When the user injects liquid, firstly, the mouthpiece 60 is removed to expose the sealing member 403, and then the sealing member 403 is removed to open the liquid injection hole 402. This process can prevent mis-operation and effectively play a child protection function.

In the dual-airway intake structure 10 provided by the present disclosure, when the user touches the communication hole 105 unintentionally, a small amount of gas entering the mounting cavity 103 through the communication hole 105 can enter the sensing cavity 101 through the communication groove 106, so that the gas pressures on both sides of the sensor 12 are kept the same, to ensure that the sensor 12 will not be triggered unintentionally. Further, since the cross-sectional area of the communication groove 106 and/or the communication hole 105 is smaller than the cross-sectional area of the air inlet 104, the formation of the gas pressure difference between the both sides of the sensor 12 will not be affected due to excessive air intake, to ensure that the sensor 12 has high sensitivity and enable it to work normally.

The power supply device 200 and the aerosol generating device provided by the present disclosure have the same technical effects as the above-mentioned dual-airway intake structure 10 because they have all the technical features of the above-mentioned dual-airway intake structure 10.

Taking the above ideal embodiments according to the present disclosure as inspiration, through the above description, the relevant staff can make various changes and modifications without departing from the scope of the present disclosure. The technical scope of the present disclosure is not limited to the content in the description, and its technical scope must be determined according to the scope of the claims.

## Claims

1. A dual-airway intake structure configured for an aerosol generating device comprising a base and a sensor, wherein a sensing cavity is provided in the base, the sensing cavity is in communication with an air outlet passage of the aerosol generating device, a mounting portion is provided in the sensing cavity, a mounting cavity is provided in the mounting portion, the sensor is mounted on the mounting portion and seals the mounting cavity, the base is provided with an air inlet and a communication hole, the air inlet is in communication with the sensing cavity and the outside atmosphere, the communication hole is in communication with the mounting cavity and the outside atmosphere, the mounting portion is provided with a communication groove, the communication groove is in communication with the mounting cavity and the sensing cavity, a cross-sectional area of the communication groove and/or the communication hole is smaller than a cross-sectional area of the air inlet.

2. The dual-airway intake structure according to claim **1,** wherein an upper end of the base is provided with an opening, the sensing cavity is formed by the opening of the base, the mounting portion is protruded from an inner bottom wall of the base, an upper end of the mounting portion is provided with an opening, the mounting cavity is formed by the opening of the mounting portion.

3. The dual-airway intake structure according to claim **2,** wherein an abutting edge is protruded from an inner wall of a lower end of the mounting portion, the sensor abuts against the abutting edge, a first communication groove is defined at the abutting edge, the first communication groove is in communication with the communication hole; a second communication groove is defined at an inner wall of the mounting portion; one end of the second communication groove penetrates through an upper end surface of the mounting portion, the other end of the second communication groove is in communication with the first communication groove, the communication groove comprises the first communication groove and the second communication groove.

4. The dual-airway intake structure according to claim **2,** wherein the air inlet and the communication hole are both defined at a lower end surface of the base, the communication hole is arranged along a central axis of the mounting portion, the air inlet is arranged at one side of the communication hole and is located outside the mounting portion.

5. The dual-airway intake structure according to claim **3,** wherein the upper end surface of the mounting portion is recessed downward along an axial direction of the mounting portion to form a notch, the notch penetrates through inner and outer walls of the mounting portion, a lead wire of the sensor extends into the sensing cavity after passing through the notch, the notch is filled with a sealant.

6. A power supply device comprising the dual-airway intake structure according to any one of claims **1** to **5**, wherein the power supply device further comprises a battery casing and a battery, the battery is installed in the battery casing, the base is installed at a lower end of the battery casing, a first air outlet passage is formed between an inner wall of the battery casing and an outer wall of the battery, the first air outlet passage is in communication with the sensing cavity, the air outlet passage comprises the first air outlet passage.

7. The power supply device according to claim **6**, wherein a top of the mounting portion is protruded with a protrusion, the communication groove penetrating through the upper end surface of the mounting portion is staggered from the protrusion, a lower end surface of the battery abuts against the protrusion.

8. An aerosol generating device comprising the power supply device according to claim **6** or **7**, wherein the aerosol generating device further comprises an atomizer, the atomizer is electrically connected to the power supply device, a second air outlet passage is provided in the atomizer, the second air outlet passage is in communication with the first air outlet passage, the air outlet passage further comprises the second air outlet passage.

9. The aerosol generating device according to claim **8**, wherein the atomizer comprises a liquid storage member, an atomizing base, a mouthpiece and a vent tube, the liquid storage member is connected to the battery casing, a liquid storage cavity is provided in the liquid storage member, the liquid storage cavity is configured to store an aerosol-forming substrate, the atomizing base and the mouthpiece are respectively installed at opposite ends of the liquid storage member, the vent tube is accommodated in the liquid storage cavity, the second air outlet passage is formed by an inner cavity of the vent tube, the mouthpiece is provided with a smoke outlet, the second air outlet passage is in communication with the smoke outlet.

10. The aerosol generating device according to claim **9**, wherein the atomizer further comprises an atomizing assembly, a lower part of the space of the second air outlet passage forms an atomizing cavity, the atomizing assembly is accommodated in the atomizing cavity, a liquid inlet is provided in a side wall of the vent tube, the liquid inlet is in communication with the liquid storage cavity and the atomizing cavity.
